**Europäisches Patentamt**

**European Patent Office**

**Office européen des brevets**

(19)

(11) Veröffentlichungsnummer: **0 134 455 B2**

(12) # NEUE EUROPÄISCHE PATENTSCHRIFT

(45) Veröffentlichungstag der neuen Patentschrift:
26.06.91 Patentblatt 91/26

(51) Int. Cl.⁵: **C08L 75/04**, C08K 5/12, C08K 5/52, C08J 5/18, C08G 18/66

(21) Anmeldenummer: 84107461.0

(22) Anmeldetag: 28.06.84

(54) **Verwendung von weichmacherhaltigen thermoplastischen Polyurethanen zur Herstellung von Folien oder Formkörpern.**

Die Akte enthält technische Angaben, die nach dem Eingang der Anmeldung eingereicht wurden und die nicht in dieser Patentschrift enthalten sind.

(30) Priorität: 30.06.83 DE 3323520

(43) Veröffentlichungstag der Anmeldung:
20.03.85 Patentblatt 85/12

(45) Bekanntmachung des Hinweises auf die Patenterteilung:
23.03.88 Patentblatt 88/12

(45) Bekanntmachung des Hinweises auf die Entscheidung über den Einspruch:
26.06.91 Patentblatt 91/26

(84) Benannte Vertragsstaaten:
AT BE CH DE FR GB IT LI NL

(56) Entgegenhaltungen:
DD-A- 143 370

(56) Entgegenhaltungen:
DE-A- 2 248 382
DE-A- 3 113 385
GB-A- 1 584 780
GB-A- 2 021 603
US-A- 3 541 274
US-A- 3 635 821
MODERN PLASTICS ENCYCLOPEDIA Band 59, Nr.10A, Oktober 1982, New York, USA; Seite 198

(73) Patentinhaber: BASF Aktiengesellschaft
Carl-Bosch-Strasse 38
W-6700 Ludwigshafen (DE)

(72) Erfinder: Zeitler, Gerhard, Dr.
11 Lessingstrasse
W-6717 Hessheim (DE)
Erfinder: Bittner, Gerhard, Dr.
Lohneufer 36
W-2840 Diepholz (DE)
Erfinder: Faehndrich, Knud
Lohneufer 14
W-2840 Diepholz (DE)
Erfinder: Rombrecht, Hans Malte, Dr.
W-2844 Quernheim 93 (DE)

EP 0 134 455 B2

## Beschreibung

Thermoplastische Polyurethan-Elastomere, im folgenden abgekürzt TPU genannt, sind seit langem bekannt. Ihre technische Bedeutung beruht auf der Kombination hochwertiger mechanischer Eigenschaften mit den Vorteilen der kostengünstigen Thermoplastverarbeitung. Durch die Verwendung unterschiedlicher chemischer Aufbaukomponenten läßt sich eine große Variationsbreite mechanischer Eigenschaften erzielen. Eine Übersicht über TPU, ihre Eigenschaften und Anwendungen wird z.B. in Kunststoffe 68 (1978). Seiten 819-825 oder Kautschuk, Gummi, Kunststoffe 35 (1982), Seiten 568-584 gegeben.

TPU können kontinuierlich oder diskontinuierlich nach verschiedenen Verfahren hergestellt werden. Als die bekanntesten werden das sogenannte Bandverfahren und das Extruderverfahren auch technisch genutzt.

Nach der GB-A 1 057 018 wird aus einer im wesentlichen linearen Polyhydroxylverbindung und überschüssigem organischen Diisocyanat ein Prepolymeres hergestellt, das über eine Dosierpumpe einem Mischkopf zugeführt und dort mit einer bestimmten Menge eines niedermolekularen Diols gemischt wird. Das erhaltene Reaktionsgemisch wird auf ein Förderband gebracht und durch einen auf 70 bis 130°C erhitzten Ofen geführt, bis es erstarrt. Das Reaktionsprodukt wird danach zerkleinert, bei Temperaturen bis 120°C 6 bis 40 Stunden getempert und kann so z.B. mit Spritzgußmaschinen zu Formkörpern verarbeitet werden.

Beim Extruderverfahren, das z.B. in der DE-A 20 59 570 (US-A 3 642 964) beschrieben wird, werden die Aufbaukomponenten direkt in den Extruder eingebracht und die Reaktion im Extruder unter bestimmten Verfahrensbedingungen durchgeführt. Das gebildete Polyurethan-Elastomere wird in den thermoplastischen Zustand übergeführt, als Strang extrudiert, in einer Inertgasatmosphäre bis zum Erstarren abgekühlt und zerkleinert. Nachteilig an diesem Verfahren ist, daß die erhaltenen TPU nicht für die Herstellung von Folien oder von feinen Profilen und Schläuchen geeignet sind. TPU gleicher Zusammensetzung sind nach dem Extruderverfahren transparent, während sie nach dem Bandverfahren ein opakes Aussehen aufweisen. Opake TPU können zu Folien verarbeitet werden, die kein Blocken zeigen, während transparente TPU hierfür ungeeignet sind.

Bei TPU, die aus linearen Polyhydroxylverbindungen, aromatischen Diisocyanaten und Diolen aufgebaut sind, wird die Härte über den Gehalt an sogenannter Hartphase, die im wesentlichen aus Diisocyanat-Diol-Segmenten besteht, eingestellt. Durch eine geeignete Wahl der Molverhältnisse der Aufbaukomponenten können TPU mit Härten von Shore A 80 bis Shore D 74 problemlos hergestellt werden. TPU mit einer Shore A-Härte kleiner als 80 können theoretisch zwar auf die gleiche Weise erhalten werden ; nachteilig ist jedoch, daß sich die Produkte bei der Herstellung nur schwierig handhaben lassen, da sie äußerst schwer erstarren und fest werden.

TPU mit geringen Härten zeigen ein gummielastisches Verhalten. Im Vergleich zu anderen elastischen Kunststoffen ist jedoch das Rückstellvermögen nur schwach ausgebildet und die bleibende Verformung nach Dehnung zu hoch.

Polyurethanelastomere können ferner durch Zusätze modifiziert werden. Zur Verbesserung der Hydrolysefestigkeit kommen in ortho-Stellung substituierte Diarylcarbodiimide in Mengen bis höchstens 2 Gew.-% zur Anwendung. Polyurethanelastomere mit niedrigem Reibungskoeffizienten werden durch Zusatz von geeigneten Schmierstoffen, wie z.B. Graphit oder Molybdändisulfid, erhalten. Außerdem können in Polyurethanelastomere nach der Kautschuktechnik Füllstoffe der verschiedensten Art in großen Mengen eingearbeitet werden.

Weichmacher werden zur Herstellung von Polyurethanelastomeren verhältnismäßig selten mitverwendet, da diese in der Hartphase unlöslich und nur wenige Weichmacher überhaupt mit den Polyurethanelastomeren verträglich sind. Walzbare Polyurethanelastomere nehmen im allgemeinen die Weichmacher nur langsam und in begrenzten Mengen auf. Außerdem darf der Weichmacher keine chemische Nebenwirkung ausüben. Daher wird z.B. von der Verwendung von Phosphorsäureestern abgeraten, die oft durch ihren Gehalt an Säurespuren die Alterungsbeständigkeit des Endproduktes beeinträchtigen. Häufig ist auch ein Weichmacherzusatz deswegen unerwünscht, weil die Polyurethanelastomeren an und für sich keine extrahierbaren Bestandteile enthalten und daher, wenn sie keinen Weichmacher enthalten, in dauernder Berührung mit Schmierstoffen oder Lösungsmitteln ihre Zusammensetzung und Dimensionen nicht ändern. Manchmal können Weichmacher auch bezüglich einer möglichen Verhärtung eher begünstigend als verzögernd wirken. Dennoch werden in einzelnen Spezialfällen als Weichmacher Phthalsäureester, Dibenzylether und flüssige Butadien-Acrylnitril-Mischpolymerisate empfohlen, jedoch stets in verhältnismäßig kleinen Mengen und meist nur, um z.B. eine bessere Konfektionierbarkeit zu erreichen (Kunststoff-Handbuch, Band VII, Polyurethane von R. Vieweg und A. Höchtlen, Carl Hanser Verlag, München 1966, Seiten 206 ff, insbesondere Seiten 254-255).

Untersucht wurde auch der Einfluß von Isodecylpelargonat in einer Menge von 0 bis 20 Gew.-% auf die Zugfestigkeit und Reißdehnung an offenbar nicht kristallisierenden Polyurethanelastomeren auf Basis von Polyoxypropylenglykolen, 2,4-Toluylen-diisocyanat, Dipropylenglykol und Trimethylolpropan (T.L. Smith and A.B. Magnusson, J. of. appl. Polymer Science 5 (1961), Seiten 218-232).

Wie in Modern Plastics Encyclopedia, Band 59, Nr. 10A. Oktober 1982. New York. USA, Seite 198, rechte Spalte, dargelegt wird, variieren Polymere und Weichmacher hinsichtlich ihrer Polarität. Polymer-Weichmacher-Systeme müssen daher optimal aufeinander abgestimmt werden, um ein Ausblühen, Ausschwitzen oder Auswandern des Weichmachers zu vermeiden. Aus der Tatsache, daß Weichmacher bei bestimmten Kunststoffen, z.B. bei Polyvinylchlorid, gute Ergebnisse erbringen, lassen sich keine Rückschlüsse auf deren Verwendbarkeit bei Polyurethanen ziehen.

Weichmacher enthaltende Polyurethan-Gießelastomere werden in der GB-A-15 84 780 beschrieben. Die vernetzten Gießelastomeren werden u.a. hergestellt unter Verwendung von mehr als difunktionellen Polyester-polyolen und sind nicht thermoplastisch verarbeitbar.

Aus der DD-A-143 370 sind Mischungen aus thermoplastischen Polyurethanen bekannt, die einen unterschiedlichen Gehalt an Hartsegmenten zur Verbreiterung des Verarbeitungsbereichs enthalten. Hierbei zeigte sich überraschenderweise, daß bei den Mischungen die Shore-A-Härte der härteren thermoplastischen Polyurethankomponente im wesentlichen erhalten bleibt, trotz Zusatz eines weicheren thermoplastischen Polyurethans in einer Menge bis 30 Gew.-%, bezogen auf das Gesamtgewicht.

Seite 3, nach Zeile 12, einfügen :

Die DE-A-31 13 385 beschreibt halogenarme, thermoplastische Polyurethanelastomere mit einer verbesserten Flammbeständigkeit, die als Flammschutzmittel eine 4-Stoff-Additiv-Kombination, bestehend aus Antimontrioxid, einer chlorierten oder bromierten verbindung mit einem Halogengehalt von 50 bis 88 Gew.-%, Aluminiumhydroxid und einem Phosphorsäuretriester enthalten.

Polyurethan-Klebstofflösungen auf der Grundlage von Polyesterurethanen und bei 20°C flüssigen, reaktiven fluorhaltigen organischen Lösungsmitteln zum Verkleben von Filmmaterialien werden in der US-A-3 541 274 beschrieben. Da diese Polyesterurethane beim Erwärmen jedoch klebrig werden, sind sie wegen der starken Haftung an die Oberfläche der Extrusions- und/oder Formwerkzeuge zur Herstellung von Folien oder Formkörpern ungeeignet.

Die Aufgabe der vorliegenden Erfindung bestand darin, gummielastische TPU mit Shore A-Härten von kleiner 80 herzustellen, die die oben genannten Nachteile nicht zeigen. Verbessert werden an derartigen TPU sollten außerdem der Druckverformungsrest und der bleibende Dehnungswert. Die erhaltenen TPU sollten sich ferner nach bekannten Methoden zu Folien oder Formkörpern verarbeiten lassen ohne hierbei zu verkleben oder schwer handhabbar zu sein.

Diese Aufgabe konnte überraschenderweise gelöst werden, durch den Zusatz von ausgewählten Weichmachern in Mengen Gew.% zu üblichen TPU von 10 bis 50.

Gegenstand der Erfindung ist somit die Verwendung von weichen, gummielastischen, thermoplastischen Polyurethanmassen mit einer Härte von Shore A 80 bis 60, die enthalten 90 bis 50 Gew.-Teile eines thermoplastischen Polyurethans mit einer Shore-A-Härte von 95 bis 80, einem Hauptschmelzpeak der Hartsegmente von 210 bis 220°C, gemessen nach der Differentialkalorimetrie, und einer Schmelzviskosität, entsprechend einem MFI bei 190°C und einem Auflagegewicht von 212 N (21,6 kp), von 0,1 bis 200 hergestellt durch Umsetzung von

a) organischen Diisocyanaten,
b) im wesentlichen difunktionellen Polyhydroxylverbindungen mit Molekulargewichten von 500 bis 8000 und
c) Kettenverlängerungsmitteln mit Molekulargewichten von 60 bis 400 in Gegenwart von
d) Katalysatoren und
e) gegebenenfalls Hilfsmitteln und/oder Zusatzstoffen und
10 bis 50 Gew.-Teile eines Weichmachers aus der Gruppe der Phthalsäuredi-(methoxiethylester), Trikresylphosphat und/oder Diphenylkresylphosphat zur Herstellung von Folien oder Formkörpern.

Durch den Zusatz der ausgewählten, Weichmacher kann die Härte von üblichen TPU mit Shore A-Werten von beispielsweise 80 bis 95 auf 60 bis 80 gesenkt werden, wobei gleichzeitig die gummielastischen Eigenschaften gegenüber nichtmodifiziertem TPU deutlich verbessert werden. Verbessert werden konnten ferner der Druckverformungsrest, die bleibende Dehnungswerte und die Rückstellgeschwindigkeit.

Die erfindungsgemäß verwendbaren gummielastischen TPU mit einer Shore-A-Härte von 80 bis 60 besitzen als Basiskunststoff thermoplastische Polyurethane mit einer Shore-A-Härte von 95 bis 80, vorzugsweise von 85 bis 80, einem Hauptschmelzpeak der Hartsegmente, gemessen nach der Differentialkalorimetrie (DSC) von 210 bis 220°C, vorzugsweise 212 bis 218°C und eine Schmelzviskosität, einem MFI (melt flow index) bei 190°C und einem Auflagegewicht von 212 N (21,6 kp) entsprechend, von 0,1 bis 200, vorzugsweise von 0,5 bis 50, die insbesondere nach dem Bandverfahren hergestellt werden. Diese werden aus den Aufbaukomponenten (a) bis (d) und gegebenenfalls (e) erhalten, zu denen wir folgendes ausführen möchten :

a) Als organische Diisocyanate (a) kommen beispielsweise aliphatische, cycloaliphatische und vorzugsweise aromatische Diisocyanate in Betracht. Im einzelnen seien beispielhaft genannt : aliphatische Diisocyanate, wie Hexamethylen-diisocyanat, cycloaliphatische Diisocyanate, wie Isophoron-diisocy-

anat. 1,4-Cyclohexan-diisocyanat, 1-Methyl-2,4- und -2,6-cyclohexan-diisocyanat sowie die entsprechenden Isomerengemische, 4,4'-, 2,4' und 2,2'-Dicyclohexylmethan-diisocyanat sowie die entsprechenden Isomerengemische und vorzugsweise aromatische Diisocyanate, wie 2,4-Toluylen-diisocyanat, Gemische aus 2,4- und 2,6-Toluylen-diisocyanat, 4,4'-, 2,4'- und 2,2'-Diphenylmethan-diisocyanat. Gemische aus 2,4'- und 4,4'-Diphenylmethan-diisocyanat, urethanmodifizierte flüssige 4,4'- und/oder 2,4'Diphenylmethan-diisocyanate, 4,4'-Diisocyanato-diphenylethan-(1,2) und 1,5-Napnthylen-diisocyanat. Vorzugsweise verwendet werden 1,6-Hexamethylen-diisocyanat, Isophoron-diisocyanat. Diphenylmethan-diisocyanat-Isomerengemische mit einem 4,4'-Diphenylmethan-diisocyanatgehalt von größen als 96 Gew.% und insbesondere 4,4'-Diphenylmethan-diisocyanat und 1,5-Naphthylen-diisocyanat.

b) Als höhermolekulare Polyhydroxylverbindungen (b) mit Molekulargewichten von 500 bis 8000 eignen sich vorzugsweise Polyetherole und insbesondere Polyesterole. In Betracht kommen jedoch auch hydroxylgruppenhaltige Polymere, beispielsweise Polyacetale, wie Polyoxymethylene und vor allem wasserunlösliche Formale, z.B. Polybutandiolformal und Polyhexandiolformal, und Polycarbonate, insbesondere solche aus Diphenylcarbonat und Hexandiol-1,6, hergestellt durch Umesterung, mit den obengenannten Molekulargewichten. Die Polyhydroxylverbindungen müssen zumindest überwiegend linear, d.h. im Sinne der Isocyanatreaktion difunktionell aufgebaut sein. Die genannten Polyhydroxylverbindungen können als Einzelkomponenten oder in Form von Mischungen zur Anwendung kommen.

Geeignete Polyetherole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- und 2,3-Butylenoxid. Vorzugsweise Anwendung finden Ethylenoxid und Mischungen aus Propylenoxid-1,2 und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans.

Vorzugsweise verwendet werden Polytetramethylenether-glykole und Polyetherole aus Propylenoxid-1,2 und Ethylenoxid, in denen mehr als 50%, vorzugsweise 60 bis 80% der OH-Gruppen primäre Hydroxylgruppen sind und bei denen zumindest ein Teil des Ethylenoxids als endständiger Block angeordnet ist.

Solche Polyetherole können erhalten werden, indem man z.B. an das Startermolekül zunächst das Propylenoxid-1,2 und daran anschließend das Ethylenoxid polymerisiert oder zunächst das gesamte Propylenoxid-1,2 im Gemisch mit einem Teil des Ethylenoxids copolymerisiert und den Rest des Ethylenoxids anschließend anpolymerisiert oder schrittweise zunächst einen Teil des Ethylenoxids, dann das gesamte Propylenoxid-1,2 und dann den Rest des Ethylenoxids an das Startermolekül anpolymerisiert.

Die im wesentlichen linearen Polyetherole besitzen Molekulargewichte von 500 bis 8000, vorzugsweise 600 bis 6000 und insbesondere 1000 bis 4000. Sie können sowohl einzeln als auch in Form von Mischungen untereinander zur Anwendung kommen.

Geeignete Polyesterole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsauren kommen beispielsweise in Betracht: aliphatische Dicarbonsäuren, wie Bernsteinsäure, Glutarsäure. Adipinsaure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Dicarbonsauren die entsprechenden Dicarbonsaurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.

Als Polyesterole vorzugsweise verwendet werden Ethandiol-polyadipate, 1,4-Butandiol-polyadipate, Ethandiol-butandiol-1,4-polyadipate, 1,6-Hexandiol-neopentylglykol-polyadipate, 1,6-Hexandiol-1,4-butandiol-polyadipate und Polycaprolactone.

Die Polyesterole besitzen Molekulargewichte von 500 bis 6000, vorzugsweise von 1000 bis 4000.

c) Als Kettenverlängerungsmittel (c) mit Molekulargewichten von 60 bis 400, vorzugsweise 60 bis 300, kommen vorzugsweise aliphatische Diole mit 2 bis 12 Kohlenstoffatomen, vorzugsweise mit 2,4 oder 6 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4, Hydroxyalkylenether des Hydrochinons, wie z.B. 1,4-Di-(β-hydroxyethyl)-hydrochinon, (cyclo) aliphatische Diamine, wie z.B. Isophoron-diamin, Ethylendiamin, 1,2-, 1,3-Propylen-diamin, N-Methyl-propylendiamin-1,3, N,N'-Dimethyl-ethylen-diamin und aromatische Diamine, wie z.B. 2,4- und 2,6-Toluylen-diamin, 3,5-Diethyl-2,4-und/ oder -2,6-toluylen-diamin und primäre ortho-di-, tri- und/oder tetraalkylsubstituierte 4,4'-Diaminodiphenylmethane.

Zur Einstellung von Härte und Schmelzpunkt der TPU können die Aufbaukomponenten (b) und (c) in relativ breiten molaren Verhältnissen variiert werden. Bewährt haben sich molare Verhältnisse von Polyhydroxylverbindungen (b) zu Kettenverlängerungsmitteln (c) von 1 : 1 bis 1 : 12, insbesondere von 1 : 1,8 bis 1 : 4,4, wobei die Härte und der Schmelzpunkt der TPU mit zunehmendem Gehalt an Diolen ansteigt.

Zur Herstellung der TPU werden die Aufbaukomponenten (a), (b) und (c) in Gegenwart von Katalysatoren (d) und gegebenenfalls Hilfsmitteln und/oder Zusatzstoffen (e) in solchen Mengen zur Reaktion gebracht, daß das Äquivalenzverhältnis von NCO-Gruppen der Diisocyanate zur Summe der Hydroxylgruppen oder Hydroxyl- und Aminogruppen der Komponenten (b) und (c) 1 : 0,85 bis 1,20, vorzugsweise 1 : 0,95 bis 1 : 1,05 und insbesondere ungefähr 1 : 1,02 beträgt.

d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin. N-Methylmorpholin, N,N'-Dimethyl-piperazin, 2-(Dimethylaminoethoxi)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Teilen pro 100 Teilen Polyhydroxylverbindung eingesetzt.

Neben Katalysatoren können den Aufbaukomponenten auch Hilfsmittel und/oder Zusatzstoffe (e) einverleibt werden. Genannt seien beispielsweise Gleitmittel, Inhibitoren, Stabilisatoren gegen Hydrolyse, Licht, Hitze oder Verfärbung, Flammschutzmittel, Farbstoffe, Pigmente, anorganische und/oder organische Füllstoffe und Verstärkungsmittel.

Nähere Angaben über die obengenannten Hilfsmittel- und Zusatzstoffe sind der Fachliteratur, beispielsweise der Monographie von J.H. Saunders und K.C. Frisch « High Polymers ». Band XVI, Polyurethane, Teil 1 und 2, Verlag Interscience Publishers 1962 bzw. 1964 oder der DE-A 29 01 774 zu entnehmen.

Die Herstellung der TPU nach dem Bandverfahren wird im einzelnen auf folgende Weise durchgeführt :

Die Aufbaukomponenten (a) bis (d) und gegebenenfalls (e) werden bei Temperaturen oberhalb des Schmelzpunktes der Aufbaukomponenten (a) bis (c) mit Hilfe eines Mischkopfes kontinuierlich gemischt. Die Reaktionsmischung wird auf einen Träger, vorzugsweise ein Förderband, aufgebracht und durch eine temperierte Zone geführt. Die Reaktionstemperatur in der temperierten Zone beträgt 60 bis 200°C, vorzugsweise 100 bis 180°C und die Verweilzeit 0,05 bis 1,0 Stunden, vorzugsweise 0,1 bis 0,25 Stunden.

Nach beendeter Reaktion wird das erfindungsgemäß verwendbare TPU abkühlen gelassen, zerkleinert oder granuliert und zwischengelagert oder direkt mit den erfindungsgemäß verwendbaren Weichmachern versetzt.

Wie bereits dargelegt wurde, werden als Weichmacher Phthalsäure-di-(methoxyethylester), Trikresylphosphat und/oder Diphenylkresylphosphat verwendet.

Die erfindungsgemäß geeigneten Weichmacher, die bei 23°C flüssig sind, und TPU werden in solchen Mengen eingesetzt, daß die gummielastischen TPU eine Shore A-Härte kleiner als 80 besitzen und 10 bis 50 Gew.-Teile, vorzugsweise 10 bis 40 Gew.-Teile der erfindungsgemäß ausgewählten Weichmacher oder Weichmachermischung und 90 bis 50 Gew.-Teile, vorzugsweise 90 bis 60 Gew.-Teile TPU enthalten.

Die erfindungsgemäß verwendbaren, flüssigen Weichmacher können den TPU nach verschiedenen Methoden einverleibt werden. Die Weichmacher können beispielsweise mit den Aufbaukomponenten (a) bis (e), vorzugsweise (b) und/oder (c) gemischt werden, so daß die Herstellung der TPU in Gegenwart der Weichmacher durchgeführt wird. Nach einer anderen Verfahrensvariante können die Weichmacher während der Polyurethanherstellung der noch nicht vollständig ausreagierten Reaktionsmischung einverleibt werden.

Besonders bewährt haben sich jedoch und daher vorzugsweise Anwendung finden Verfahren, bei denen die erfindungsgemäß verwendbaren Weichmacher in das ausreagierte, gegebenenfalls granulierte TPU mit einer Shore A-Härte 80 und größer eingebracht werden. So können die Weichmacher durch Auftrommeln, beispielsweise in einem heizbaren Horizontalmischer, und gleichzeitigem Erwärmen, z.B. auf ungefähr 50 bis 60°C, granuliertem TPU einverleibt werden. Vorzugsweise werden die Weichmacher über die Schmelze mit Hilfe von Extrudern, die gegebenenfalls mit speziellen Vorrichtungen, wie Dosierpumpen ausgestattet sind, bei Temperaturen von 180 bis 200°C in das TPU eingearbeitet.

Die erfindungsgemäß verwendbaren weichen, gummielastischen TPU besitzen Härten von Shore A 60 bis 80 und je nach Art und Menge der einverleibten Weichmacher Reißfestigkeiten nach DIN 53 504 von ungefähr 25 bis 50 N/mm². Deutlich verbessert werden konnten auch der Druckverformungsrest und die bleibenden Dehnungswerte. Während beispielsweise ein TPU mit einer Shore A-Härte von 85 ohne Weichmacher nach einer Dehnung um 100% einen bleibenden Dehnungswert von 4 bis 6% aufwies, besaß dasselbe TPU nach Einarbeitung von 20 Gew.% Trikresylphosphat eine Shore A-Härte von 70 und einen bleibenden Dehnungswert von 1 bis 2%. Aufgrund einer wesentlich erhöhten Rückstellgeschwindigkeit nehmen die aus den erfindungsgemäßen TPU hergestellten Formkörper nach der Entlastung sehr rasch wieder ihre ursprüngliche Form an.

Die Produkte finden Verwendung zur Herstellung von Folien und Formkörpern, vorzugsweise Profilen und Röhren. Sie eignen sich insbesondere zur Herstellung von Dichtungsprofilen, z.B. für Fenster- und Türdichtungen, und für Lippendichtungen.

Beispiel 1

75 Gewichtsteile eines TPU mit einer Härte von 85 Shore A, einem MFI bei 190°C und einem Auflagegewicht von 212 N (21,6 kp) von 1,2 sowie einem Hauptschmelzpeak der Hartsegmente von 214°C, gemessen nach der Differentialkalorimetrie, wurden in einem heizbaren Horizontalmischer bei 60°C eine Stunde lang mit 25 Gewichtsteilen Phthalsäure-di-(methoxiethylester) gemischt und anschließend bei 190°C in einem Schneckenextruder aufbereitet.

Das erhaltene TPU besaß eine Härte von 72 Shore A und einen MFI bei 190°C und einem Auflagegewicht von 212 N (21,6 kp) von 90. Die Reißfestigkeit nach DIN 53 504 betrug 34 N/mm² und die bleibende Dehnung nach einer Dehnung von 100% für 30 Minuten 1,8%, während sich unter identischen Bedingungen für das Ausgangsmaterial eine bleibende Dehnung von 4,5% ergab.

Beispiel 2

80 Gewichtsteile eines TPU mit den in Beispiel 1 beschriebenen Kenndaten wurden in einem heizbaren Horizontalmischer bei 50°C eine Stunde lang mit 20 Gewichtsteilen Diphenylkresylphosphat gemischt. Das vollkommen klebfreie Granulat wurde bei 205°C mit einer Spritzgußmaschine zu Formkörpern verarbeitet.

Die erhaltenen Formteile besaßen eine Härte von 74 Shore A und einen MFI bei 190°C und einem Auflagegewicht von 212 N (21,6 kp) von 43. Die Reißfestigkeit nach DIN 53 504 betrug 38 N/mm². Der Druckverformungsrest nach DIN 53 517 bei 70°C betrug 35%, während man für das TPU ohne Diphenylkresylphosphat einen Druckverformungsrest von 45% erhielt.

Beispiel 3

80 Gewichtsteile eines TPU mit einer Härte von 81 Shore A und einem MFI von 6,0 bei 190°C und einem Auflagegewicht von 212 N (21,6 kp) wurden mit 20 Gewichtsteilen Trikresylphosphat bei 50°C eine Stunde lang in einem Horizontalmischer gemischt.

Das trockene Granulat konnte direkt mit einer Spritzgußmaschine oder einem Schneckenextruder zu Dichtungsprofilen verarbeitet werden. An dem erhaltenen Formteil wurde eine Härte von 70 Shore A, ein MFI von 82 bei 190°C und einem Auflagegewicht von 212 N (21,6 kp), eine Reißfestigkeit nach DIN 53 504 von 30 N/mm² und eine bleibende Dehnung nach einer Dehnung von 100% für 30 Minuten von 1,3% gemessen, während sie für das TPU ohne Trikresylphosphatzusatz 4,8% betrug.

Beispiel 4

60 Gewichtsteile eines TPU mit den in Beispiel 3 beschriebenen Kenndaten wurden mit 40 Gewichtsteilen Phthalsäure-di-(methoxyethylester) bei 185°C in einem Schneckenextruder gemischt und in üblicher Weise zu Granulat verarbeitet.

Ein aus dem Granulat hergestelltes Formteil besaß eine Härte von 60 Shore A, eine Reißfestigkeit nach DIN 53 504 von 28 N/mm², und einen Druckverformungsrest nach DIN 53 517 bei 70°C von 40%, während das Ausgangsmaterial einen solchen von 48% aufwies.

Vergleichsbeispiele

Wurden 80 Gewichtsteile der in den Beispielen 1 bis 4 beschriebenen TPU in Granulatform mit 20 Gewichtsteilen Phthalsäure-di-butylester bei 60°C 24 Stunden lang in einem Horizontalmischer behandelt, so wurde der Weichmacher nur über die Oberfläche des Granulats verteilt, nicht jedoch in das TPU aufgenommen. Das Granulat blieb naß.

Wurde der Phthalsäure-dibutylester in einem Schneckenextruder direkt der TPU-Schmelze einverleibt, so erhielt man zunächst trockene Granulate, aus welchen nach ca. 24 Stunden der Weichmacher wieder auszuwandern begann.

Die Granulate waren naß und für eine weitere Verwendung unbrauchbar.

**Ansprüche**

1. Verwendung von weichen, gummielastischen, thermoplastischen Polyurethanmassen mit einer Härte von Shore A 60 bis 80, die enthalten, bezogen auf 100 Gew.-Teile, 90 bis 50 Gew.-Teile eines thermoplastischen Polyurethans mit einer Shore A-Härte von 95 bis 80, einem Hauptschmelzpeak der Hartsegmente von 210 bis 220°C, gemessen nach der Differentialkalorimetrie, und einer Schmelzviskosität, entsprechend einem MFI bei 190°C und einem Auflagegewicht von 212 N, von 0,1 bis 200, hergestellt durch Umsetzung von
    a) organischen Diisocyanaten,
    b) im wesentlichen difunktionellen Polyhydroxylverbindungen mit Molekulargewichten von 500 bis 8000 und
    c) Kettenverlängerungsmitteln mit Molekulargewichten von 60 bis 400 in Gegenwart von
    d) Katalysatoren und
    e) gegebenenfalls Hilfsmitteln und/oder Zusatzstoffen
    und
10 bis 50 Gew.-Teilen eines Weichmachers aus der Gruppe der Phthalsäuredi-(methoxiethylester), Trikresylphosphat und/oder Diphenylkresylphosphat
    zur Herstellung von Folien oder Formkörpern.

2. Verwendung von weichen, gummielastischen, thermoplastischen Polyurethanmassen mit einer Härte von Shore A 60 bis 80, die bestehen, bezogen auf 100 Gew.-Teile, aus 90 bis 50 Gew.-Teilen eines thermoplastischen Polyurethans mit einer Shore A-Härte von 95 bis 80, einem Hauptschmelzpeak der Hartsegmente von 210 bis 220°C, gemessen nach der Differentialkalorimetrie, und einer Schmelzviskosität, entsprechend einem MFI bei 190°C und einem Auflagegewicht von 212 N, von 0,1 bis 200, hergestellt durch Umsetzung von
    a) organischen Diisocyanaten,
    b) im wesentlichen difunktionellen Polyhydroxylverbindungen mit Molekulargewichten von 500 bis 8000 und
    c) Kettenverlängerungsmitteln mit Molekulargewichten von 60 bis 400 in Gegenwart von
    d) Katalysatoren und
    e) gegebenenfalls Hilfsmitteln und/oder Zusatzstoffen
    und

10 bis 50 Gew.-Teilen eines Weichmachers aus der Gruppe der Phthalsäuredi-(methoxiethylester), Trikresylphosphat und/oder Diphenykresylphosphat
    zur Herstellung von Folien oder Formkörpern.

3. Verwendung von Polyurethanmassen nach Anspruch 1 oder 2, dadurch gekennzeichnet, daß die thermoplastischen Polyurethane nach dem Bandverfahren hergestellt worden sind.

4. Verwendung von Polyurethanmassen nach Anspruch 1 oder 2, dadurch gekennzeichnet, daß zum Aufbau des thermoplastischen Polyurethans als organische Diisocyanate (a) 4,4'-Diphenylmethan-diisocyanat oder 1,5-Naphthylen-diisocyanat verwendet worden sind.

5. Verwendung von Polyurethanmassen nach Anspruch 1 oder 2, dadurch gekennzeichnet, daß zum Aufbau des thermoplastischen Polyurethans als im wesentlichen difunktionelle Polyhydroxylverbindungen (b) lineare Polyesterole aus Adipinsäure und Diolen mit 2 bis 6 Kohlenstoffatomen, Polycaprolactone und/oder Polytetramethylenether-glykole verwendet worden sind.

**Claims**

1. The use of a flexible, elastomeric, thermoplastic polyurethane composition having a Shore A hardness from 60 to 80 and comprising, based on 100 parts by weight, from 90 to 50 parts by weight of a thermoplastic polyurethane having a Shore A hardness from 95 to 80, a primary melt peak of the rigid segments from 210 to 220°C, as determined by differential scanning calorimetry, and a melt viscosity corresponding to a melt flow index at 190°C under a load weight of 212 N of from 0.1 to 200, prepared by reaction of
    a) organic diisocyanates,
    b) essentially difunctional polyhydroxy compounds having molecular weights from 500 to 8,000 and
    c) chain extenders having molecular weights from 60 to 400 in the presence of
    d) catalysts and
    e) optionally auxiliaries and/or additives
    and
from 10 to 50 parts by weight of a plasticizer from the group consisting of di(methoxyethyl) phthalate, tricresyl phosphate or diphenyl cresyl phosphate for producing sheets and molded parts.

2. The use of a flexible, elastomeric, thermoplastic polyurethane composition having a Shore A hardness from 60 to 80 and consisting of, based on 100 parts by weight, from 90 to 50 parts by weight of a thermoplastic polyurethane having a Shore A hardness from 95 to 80, a primary melt peak of the rigid segments from 210 to 220°C, as determined by differential scanning calorimetry, and a melt viscosity corresponding to a melt flow index at 190°C under a load weight of 212 N of from 0.1 to 200, prepared by reaction of

a) organic diisocyanates,

b) essentially difunctional polyhydroxy compounds having molecular weights from 500 to 8,000 and

c) chain extenders having molecular weights from 60 to 400 in the presence of

d) catalysts and

e) optionally auxiliaries and/or additives

and

from 10 to 50 parts by weight of a plasticizer from the group consisting of di(methoxyethyl) phthalate, tricresyl phosphate or diphenyl cresyl phosphate for producing sheets and molded parts.

3. The use of polyurethane compositions as claimed in claim 1 or 2, wherein the thermoplastic polyurethanes have been prepared using a continuous sheet process.

4. The use of polyurethane compositions as claimed in claim 1 or 2, wherein the organic diisocyanates (a) used for constructing the thermoplastic polyurethane were 4,4'-di-phenylmethane diisocyanate or 1,5-naphthylene diisocyanate.

5. The use of polyurethane compositions as claimed in claim 1 or 2, wherein the essentially difunctional polyhydroxy compounds (b) used for constructing the thermoplastic polyurethane were linear polyesterols of adipic acid and diols of 2 to 6 carbon atoms, polycaprolactones and/or polytetramethylene ether glycols.

## Revendications

1. Utilisation de masses à base de polyuréthanne thermoplastiques souples, ayant l'élasticité du caoutchouc, d'une dureté Shore A de 60 à 80, qui contiennent, par rapport à 100 parties en poids, 90 à 50 parties en poids d'un polyuréthanne thermoplastique d'une dureté Shore A de 95 à 80, possédant un pic de fusion principal des segments durs, déterminé par calorimétrie différentielle, entre 210 et 200°C et une viscosité à l'état fondu correspondant à un indice de fusion (MFI) à 190°C sous une charge de 212 N de 0,1 à 200, préparé par la réaction

a) de diisocyanates organiques,

b) de composés polyhydroxylés essentiellement bifonctionnels avec des poids moléculaires entre 500 et 8000 et

c) d'agents d'allongement des chaînes avec des poids moléculaires entre 60 et 400 en présence

d) de catalyseurs et

e) éventuellement d'additifs et (ou) d'adjuvants, et

10 à 50 parties en poids d'un plastifiant choisi dans le groupe de l'ester di-(méthoxy-éthylique) de l'acide phtalique, du tricrésyl-phosphate et du diphényl-crésyl-phosphate pour la fabrication de feuilles ou d'éléments façonnés.

2. Utilisation de masses à base de polyuréthanne thermoplastiques souples, ayant l'élasticité du caoutchouc, d'une dureté Shore A de 60 à 80, qui se composent de, par rapport à 100 parties en poids, 90 à 50 parties en poids d'un polyuréthanne thermoplastique d'une dureté Shore A de 95 à 80, possédant un pic de fusion principal des segments durs, déterminé par calorimétrie différentielle, entre 210 et 200°C et une viscosité à l'état fondu correspondant à un indice de fusion (MFI) à 190°C sous une charge de 212 N de 0,1 à 200, préparé par la réaction

a) de diisocyanates organiques,

b) de composés polyhydroxylés essentiellement bifonctionnels avec des poids moléculaires entre 500 et 8000 et

c) d'agents d'allongement des chaînes avec des poids moléculaires entre 60 et 400 en présence

d) de catalyseurs et

e) éventuellement d'additifs et (ou) d'adjuvants, et

10 à 50 parties en poids d'un plastifiant choisi dans le groupe de l'ester di-(methoxy-éthylique) de l'acide phtalique, du tricrésyl-phosphate et du diphényl-crésyl-phosphate pour la fabrication de feuilles ou d'éléments façonnés.

3. Utilisation de masses à base de polyuréthanne suivant la revendication 1 ou 2, caractérisée en ce que les polyuréthannes thermoplastiques ont été produits par le procédé d'extrusion sur bande transporteuse.

4. Utilisation de masses à base de polyuréthanne suivant la revendication 1 ou 2, caractérisée en ce que le diisocyanate organique (a), utilisé pour la formation du polyuréthanne thermoplastique, est le diisocyanate-4,4' de diphényl-méthane ou le diisocyanate-1,5 de naphtylène.

5. Utilisation de masses à base de polyuréthanne suivant la revendication 1 ou 2, caractérisée en ce que les composés polyhydroxyles essentiellement bifonctionnels (b), utilisés pour la formation du polyuréthanne thermoplastique, ont été choisis parmi les polyestérols linéaires de l'acide adipique et de diols en $C_2$ à $C_6$, les polycaprolactones et (ou) les polytétraméthylène-éther-glycols.